# EUROPEAN PATENT APPLICATION

(11) **EP 4 496 087 A1**
(43) Date of publication of application: **22.01.2025**
(21) Application number: 23770806.0
(22) Date of filing: 14.03.2023
(51) Int. Cl.: H01M 50/184, H01M 10/04, H01M 50/152, H01M 50/538

(54) **BATTERY**

(30) Priority: 18.03.2022 JP 2022044518
(71) Applicant: Panasonic Energy Co., Ltd., Osaka 570-8511 (JP)
(72) Inventor: IWAKURA, Tatsuya, Kadoma-shi, Osaka 571-0057 (JP); OKIMOTO, Ryota, Kadoma-shi, Osaka 571-0057 (JP)
(74) Representative: Novagraaf International SA
(86) International application number: PCT/JP2023/009948
(87) International publication number: WO 2023/176853

(57) **Abstract**

A sealing body (30) comprises: a ring-shaped current collection plate (34) that is connected to an electrode body (10) by means of a positive electrode lead (12); a disc-shaped cap (32) that is stacked on the current collection plate (34) and is bonded, at a radially central portion thereof, to the current collection plate (34); and a gasket (36) that encloses a peripheral portion of the stack of the current collection plate (34) and the cap (32) vertically and laterally. An exterior can (20), in an upper-end part thereof, sandwiches and fixes in place a peripheral portion of the gasket (36) so as to cover the peripheral portion vertically and laterally. The gasket (36) includes an inwardly protruding portion (366) that is inserted from the outside between the current collection plate (34) and the cap (32). The gap between the current collection plate (34) and the end of the cap (32) is filled by the protruding portion (366).

## Description

### TECHNICAL FIELD

The present disclosure relates to a battery in which an opening of an exterior can is closed with a sealing assembly via a gasket.

### BACKGROUND

Lithium ion secondary batteries are widely used for applications such as driving power supplies for mobile devices and electric vehicles, and large power storage devices.

A sealed type lithium ion secondary battery in which an electrode assembly formed of a wound body in which a positive electrode and a negative electrode are wound with a separator interposed therebetween, and an electrolyte are accommodated in an exterior can, and an opening of the exterior can is closed with a sealing assembly has been known as the lithium ion secondary battery.

In such a sealed lithium ion secondary battery, the sealing assembly includes a current collector plate connected to the electrode assembly by a wiring and a cap welded to the current collector plate, and the cap functions as an electrode terminal. A peripheral edge of a laminate of the current collector plate and the cap is enclosed by a gasket, and the gasket is caulked and fixed from the outside at an end of the exterior can (see Patent Literature 1).

### CITATION LIST

### PATENT LITERATURE

Patent Literature 1: JP 2013-120644 A

### SUMMARY

Here, the cap and the current collector plate are welded at a middle portion in a radial direction, and the cap and the current collector plate may be positioned while having a slight gap therebetween at outer ends thereof. In this case, when the peripheral edge is caulked and fixed by the exterior can, the cap is deformed (warped upward) in such a way that the center side of the cap is lifted up, and thus, flatness cannot be maintained, and there is a possibility that welding with the current collector plate becomes insufficient.

A battery according to the present disclosure includes: an exterior can that has an opening at one end; an electrode assembly that is accommodated in the exterior can and is formed by winding a positive electrode, a negative electrode, and a separator; and a sealing assembly that closes the opening, in which the sealing assembly includes: a ring-shaped current collector plate that is connected to the electrode assembly by a lead; a disk-shaped cap that is laminated on the current collector plate and is bonded to the current collector plate at a middle portion in a radial direction; and a gasket that encloses a peripheral edge of a laminate of the current collector plate and the cap from above, below, and a side, the exterior can clamps and fixes a peripheral edge of the gasket in a state of covering the peripheral edge of the gasket from above, below, and a side at an upper end of the exterior can, and the gasket has an inward protrusion inserted between the current collector plate and the cap from an outside, the protrusion filling a gap between the current collector plate and the cap.

According to the present disclosure, it is possible to prevent the cap from being deformed in such a way that the center side of the cap is lifted up when the peripheral edge is caulked and fixed by the exterior can.

### BRIEF DESCRIPTION OF DRAWINGS

FIG. 1 is a cross-sectional view illustrating an overall configuration of a battery.
FIG. 2 is a cross-sectional view of a sealing portion, illustrating a welded portion between a cap and a current collector plate.
FIG. 3 is a cross-sectional view of the sealing portion, illustrating the cap warped upward by caulking.
FIG. 4 is a cross-sectional view of the sealing portion including a gasket having a protrusion.
FIG. 5 is a cross-sectional view of the gasket.

### DESCRIPTION OF EMBODIMENTS

Hereinafter, embodiments of the present disclosure will be described with reference to the drawings. Note that the following embodiments do not limit the present disclosure, and a configuration obtained by selectively combining a plurality of examples is also included in the present disclosure.

### "Overall Configuration"

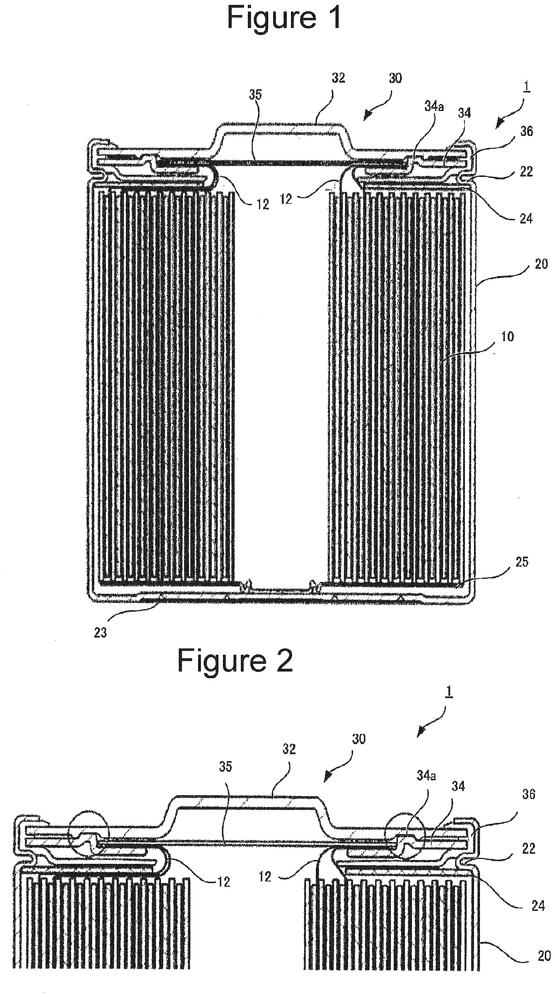

FIG. 1 is a cross-sectional view illustrating an overall configuration of a lithium ion secondary battery according to an embodiment of the present disclosure. In the present embodiment, a cylindrical battery is illustrated, but another shape such as a square shape may be used.

As illustrated in FIG. 1, a battery 1 includes a cylindrical electrode assembly 10, a cylindrical exterior can 20 in which an upper end for accommodating the electrode assembly is opened, and a circular sealing assembly 30 for closing an opening of the exterior can 20. An electrolytic solution is accommodated in the exterior can 20 together with the electrode assembly 10. The electrolytic solution may be an aqueous electrolytic solution, but in the present embodiment, a non-aqueous electrolytic solution is used.

The exterior can 20 has an annular groove portion 22 on an upper peripheral wall, and the sealing assembly 30 is supported by the groove portion 22 and closes the opening of the exterior can 20. For convenience of description, a sealing assembly 30 side of the battery 1 is defined as an upper side, and a bottom side of the exterior can 20 is defined as a lower side.

The electrode assembly 10 is a wound body in which a positive electrode and a negative electrode are wound with a separator interposed therebetween. In the present embodiment, a positive electrode lead 12 connected to the positive electrode extends upward from an outer peripheral side of the electrode assembly 10. A disk-shaped upper insulating plate 24 is disposed on an upper side of the electrode assembly 10. The upper insulating plate 24 has an opening at a central portion, and the positive electrode lead 12 extends upward through the opening of the upper insulating plate 24.

The sealing assembly 30 includes a cap 32, a current collector plate 34, and a gasket 36, and is formed into a disk shape as a whole. An end on an outer peripheral side of the sealing assembly 30 is disposed on the groove portion 22 of the exterior can 20, and an upper end of the exterior can 20 is bent inward, whereby the sealing assembly 30 is caulked and fixed to the upper end of the exterior can 20 and closes the opening of the exterior can 20.

The cap 32 is a metal member that is circular as a whole and has a central portion protruding upward. A wiring member is connected to the cap 32 when the battery 1 is modularized to form a battery module, and functions as a positive electrode external terminal in the present embodiment.

In this example, the exterior can 20 made of metal is connected to the negative electrode of the electrode assembly 10, and thus, the exterior can 20 functions as a negative electrode external terminal of the battery 1.

The current collector plate 34 is a ring-shaped metal member having a diameter similar to that of the cap 32, and is disposed closer to the electrode assembly 10 than the cap 32. The current collector plate 34 has an opening at a central portion in a radial direction. The cap 32 and the current collector plate 34 are welded, and the current collector plate 34 is welded at a position closer to an outer peripheral edge than the center of the cap 32 in the radial direction. An annular projection 34a is formed on the current collector plate 34, and the projection 34a serves as a welded portion welded to the cap 32. A recess corresponding to the projection 34a of the current collector plate 34 is formed on a lower side of the cap 32, and the cap 32 and the current collector plate 34 are welded to each other in a state where the projection 34a is fitted into the recess.

A positive electrode ring 35 is disposed on an upper side of the current collector plate 34 and on an inner side of the projection 34a so as to overlap the current collector plate 34. Then, the positive electrode lead 12 that has passed through the inside of the upper insulating plate 24 is inserted and fixed between the positive electrode ring 35 and the current collector plate 34.

The gasket 36 covers an outer peripheral portion of a laminate of the cap 32 and the current collector plate 34 from an upper side of the periphery of the cap 32, then extends inward along a lower surface of the current collector plate 34, and is interposed between the current collector plate 34 and the upper insulating plate 24. The gasket 36 is an annular resin member or rubber member for preventing the cap 32 and the current collector plate 34 from coming into contact with the exterior can 20 to ensure insulation between the exterior can 20 and the sealing assembly 30. The gasket 36 closes a gap between the exterior can 20 and the sealing assembly 30 at the outer peripheral portion of the laminate to seal the inside of the battery 1.

An opening vertically overlapping the opening of the current collector plate 34 and the opening of the upper insulating plate 24 is formed at the center of the gasket 36 in the radial direction, and the positive electrode lead 12 passes therethrough. In this example, a through-hole through which the electrolytic solution passes may be formed at a portion of the gasket 36 that is positioned below the current collector plate 34.

An upper end of the gasket 36 is bent inward and caulked and fixed together with the upper end of the exterior can 20 positioned outside the upper end of the gasket 36, thereby clamping the current collector plate 34 and the cap 32 positioned inside. At this time, the gasket 36 is elastically deformed to seal a contact portion.

The negative electrode of the electrode assembly 10 is connected to a negative electrode current collector plate 25 disposed below the negative electrode, and the negative electrode current collector plate 25 is connected to the exterior can 20 at a central portion. A part of the negative electrode of the electrode assembly 10 may extend downward and be connected to the negative electrode current collector plate 25. Alternatively, a negative electrode lead may be provided, and the negative electrode of the electrode assembly 10 and the negative electrode current collector plate 25 may be connected by the negative electrode lead.

A circular recess 23 is provided at the bottom of the exterior can 20, and functions as a safety valve that operates when an abnormality occurs in the battery 1.

### "Welded Portion"

FIG. 2 is a view in which the welded portion is indicated by a circle. In this manner, a top surface of the projection 34a matches a lower surface of the recess of the cap 32 and is welded thereto.

Here, in a sealed type lithium ion secondary battery as in the present embodiment, the sealing assembly 30 includes four parts of the cap 32, the current collector plate 34, the positive electrode ring 35, and the gasket 36. A process flow involves inserting the gasket 36 and the current collector plate 34 into the exterior can 20 in which the groove portion 22 is formed, then welding the current collector plate 34, the positive electrode ring 35, and the positive electrode lead 12, followed by injecting the electrolytic solution. Then, the cap 32 is inserted after completion of the injection, and the sealing assembly 30 is fixed to the outer peripheral portion of the exterior can 20 by caulking. After the caulking, the cap 32 and the current collector plate 34 are welded to ensure electrical conduction.

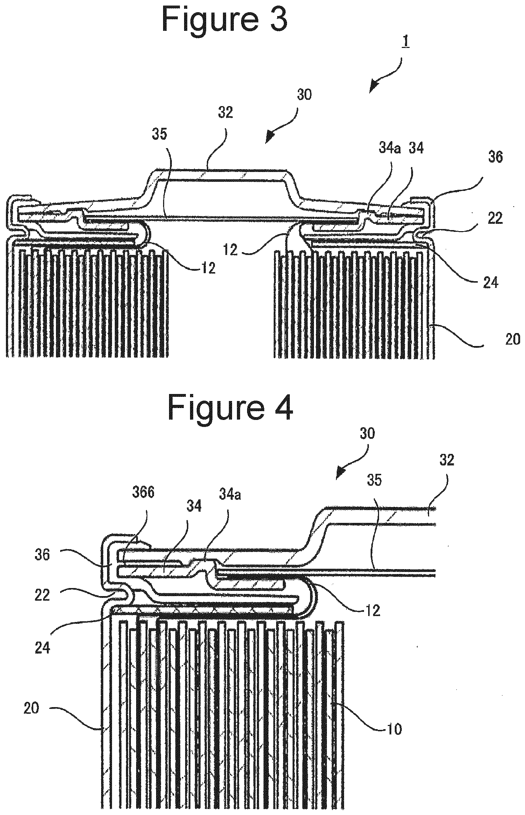

Here, the cap 32 may be warped upward due to a load applied at the time of caulking. FIG. 3 is a view illustrating a state in which the cap 32 is warped upward. When the upward warpage occurs in this way, a gap is formed at the welded portion welded to the current collector plate 34, and there is a possibility that contact between the cap 32 and the current collector plate 34 becomes insufficient and sufficient bonding cannot be obtained in welding.

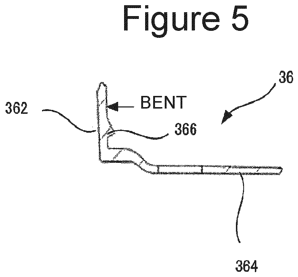

FIG. 4 is a cross-sectional view illustrating the welded portion and the periphery thereof in the battery 1 according to the present embodiment, and FIG. 5 is a cross-sectional view of the gasket according to the present embodiment.

An outer peripheral side of the gasket 36 is a cylindrical side wall 362 extending in a vertical direction, a ring-shaped bottom wall 364 extends inward from a lower end of the side wall 362, and a central portion of the bottom wall 364 is opened.

In the present embodiment, an annular protrusion 366 formed by undercutting and protruding inward is provided at a middle portion of the side wall 362.

Therefore, when the cap 32 is inserted, the protrusion 366 of the gasket 36 enters between peripheral edges of the cap 32 and the current collector plate 34. Therefore, when the upper end of the exterior can 20 is bent inward together with the upper end of the gasket 36 and caulked, it is possible to prevent an outer peripheral end of the cap 32 from moving downward and the central portion from being warped upward. With such a configuration, flatness of the top surface of projection 34a of the current collector plate 34 and the lower surface of the recess of the cap 32 is maintained, and thus, welding of this portion can be reliably performed.

In addition, since the outer peripheral ends of the cap 32 and the current collector plate 34 are sealed by the protrusion 366, airtightness between the cap 32 and the current collector plate 34 can be secured.

Furthermore, in the welding of the positive electrode lead 12 and the current collector plate 34, it is conceivable to adopt a method of performing welding in a state where the opening of the exterior can 20 faces downward in order to prevent a spatter at the time of welding from being mixed into the electrode assembly 10. In the present embodiment, since the gasket 36 has the protrusion 366, the outer peripheral end of the current collector plate 34 can be supported by the protrusion 366. That is, when the gasket 36 and the current collector plate 34 are inserted into the exterior can 20, the gasket 36 is elastically deformed and fixed to an inner surface of the exterior can 20, and the gasket 36 holds the current collector plate 34, so that even when the opening of the exterior can 20 faces downward, the current collector plate 34 does not fall off, and the current collector plate 34 and the positive electrode lead 12 can be welded in this state.

### REFERENCE SIGNS LIST

- 1: Battery
- 10: Electrode assembly
- 12: Positive electrode lead
- 20: Exterior can
- 22: Groove portion
- 23: Recess
- 24: Upper insulating plate
- 25: Negative electrode current collector plate
- 30: Sealing assembly
- 32: Cap
- 34: Current collector plate
- 34a: Projection
- 35: Positive electrode ring
- 36: Gasket
- 362: Side wall
- 364: Bottom wall
- 366: Protrusion

## Claims

1. A battery comprising:
an exterior can that has an opening at one end;
an electrode assembly that is accommodated in the exterior can and is formed by winding a positive electrode, a negative electrode, and a separator; and
a sealing assembly that closes the opening, wherein
the sealing assembly includes:
a ring-shaped current collector plate that is connected to the electrode assembly by a lead;
a disk-shaped cap that is laminated on the current collector plate and is bonded to the current collector plate at a middle portion in a radial direction; and
a gasket that encloses a peripheral edge of a laminate of the current collector plate and the cap from above, below, and a side,
the exterior can clamps and fixes a peripheral edge of the gasket in a state of covering the peripheral edge of the gasket from above, below, and a side at an upper end of the exterior can, and
the gasket has an inward protrusion inserted between the current collector plate and the cap from an outside, the protrusion filling a gap between the current collector plate and the cap.

2. The battery according to claim 1,
wherein the protrusion of the gasket has an annular shape and is positioned between the current collector plate and the cap to secure airtightness between the current collector plate and the cap.
